# EUROPEAN PATENT SPECIFICATION

(11) **EP 3 483 500 B1**
(45) Date of publication and mention of the grant of the patent: **24.06.2020**
(21) Application number: 18205882.6
(22) Date of filing: 13.11.2018
(51) Int. Cl.: F21V 5/08, F21V 7/00, G02B 19/00, F21W 111/00, F21V 33/00, F21Y 115/10, F21S 9/02

(54) **MULTIPLE LIGHTING SAFETY DEVICE**
SICHERHEITSVORRICHTUNG MIT MEHRFACHBELEUCHTUNG
DISPOSITIF DE SÉCURITÉ D'ÉCLAIRAGE MULTIPLE

(30) Priority: 14.11.2017 IT 201700130061
(43) Date of publication of application: 15.05.2019
(73) Proprietor: Venitem S.R.L., 30030 Salzano VE (IT)
(72) Inventor: Trivellin, Nicola, 30030 Salzano VE (IT)

(56) References cited:
- EP-A1- 2 711 615
- EP-A2- 2 760 009
- WO-A1-2016/055741
- US-A1- 2008 232 102
- US-B1- 6 969 181

## Description

The field of the present invention relates to a device which satisfies the various requirements of safety and emergency lighting.

### Description

It is well known that express regulatory provisions require many activities to have a light-signalling alarm and/or emergency lighting.

The regulatory requirements for fire light signalling require the illumination of the surfaces of a cuboid in which the detector is placed with a minimum illuminance value (lux) that is dependent on the light pulse time.

This requirement makes the illumination of an angle of 90° lateral to the luminaire (+ 90° to the right and -90° to the left) particularly critical.

In the event that the lighting is used as an alarm signal, a minimum luminous flux pulse must be guaranteed in the coverage area of the signalling device to visually signal an alarm in progress also to those unable to hear an acoustic alarm, for example people with a hearing impairment or with hearing protection devices such as earplugs or noise headsets.

Emergency and/or fire protection lighting can also be used to illuminate escape routes, or emergency exits, in the expectation that the people in the various rooms must leave and move away for their safety. In addition to illuminating the escape routes the exits must be clearly marked, as well as the various safety and fire protection devices. Very often such signalling devices are illuminated from behind the explanatory sign. However, the lighting of these signalling devices might not be the same for the lighting for the door, the fire extinguishers, the first aid kits, a change of direction, the presence of stairs, etc. placed near the signalling device.

Moreover, there are different requirements regarding the minimum degree of illumination for the activity in the place where said signalling device is installed.

To further complicate matter, there is the fact that the lighting of escape routes, which are connected to exits at the top of which the lighting device is placed, must be made with a differentiated provision for the center line axis and the marginal parts, lateral to it.

For all the aforementioned reasons, it is therefore currently necessary to adequately satisfy three types of products:
- a signal indicator or signalling device;
- a lighting device to illuminate the object or relevant part of it;
- a lighting device, sufficiently distant from the aforesaid devices, for lighting escape routes.

It is quite clear that there are plant engineering, design and cost problems that means making these systems compliant is very expensive.

It must also be borne in mind that all the aforementioned safety devices must undergo continual maintenance and kept under constant control with substantial investments and expenses.

The installation of these devices also conflicts with other requirements, such as those for their protection, for which below a certain height they must be protected by protection grilles. An installation that is very high up could, however, avoid collisions and mechanical stresses, but there might be the risk of the premature indication and signalling failure due to the layers of the combustion fumes of a fire.

The best solution would therefore be to install the device just above the height for which the presence of the protection grille would not be mandatory. Unfortunately at such a height the installation device generally does not illuminate very far along escape routes. On the contrary, there is the risk of exceeding the degree of uniformity, with a very illuminated area, for example, near the exit door and with the lighting considerably dropping off further along the escape route.

In order to meet these specifications, the use of diffusing or refractive optical systems which protrude at the front from the luminaire is a well-known technique; in this way the side walls of the optical element can emit light laterally and meet regulatory lighting requirements.

It would be ideal if one could keep the dimensions of a backlit signalling device without excessive protrusions, but the varying lighting requisites require lens aperture cones that exceed and protrude from the signalling device.

It is quite possible that these protruding parts for a device placed also above the intended height, above all above a passage for carrying objects and things, are inevitably bound to get problems and break due to the various stresses.

Moreover, the light emission of said projecting parts would soon be reduced and compromised by the deposition of dust.

It would be unthinkable and implausible to adopt excessive undifferentiated lighting, without conflicting with the glare requirements.

In the event light sources made with various emitters were to be used, it should be borne in mind that, taking into account the ageing factor, the colour temperature change could lead to, for some sources, an excessive colour change.

An example of multiple lighting safety device with an optical element embedded into the lighting fixture is shown in EP2711615.

### Objects of the invention

A primary object of this invention is to overcome the drawbacks of the known art.

An important object of this invention is to make available an emergency lighting device that can resolve and overcome all the aforementioned drawbacks. In particular, the safety device for multiple lighting makes it possible to simplify the design, to comply with regulatory requirements, to minimise the initial installation costs and to drastically reduce maintenance costs for the entire useful life of the device.

Another object of the object of the invention is to make available a safety device for multiple illumination that is completely reliable, with simple shapes, without dangerous protrusions and that, as far as possible, can maintain the overall dimensions required for standard signs.

A different object of the object of the invention is to make available a device without parts that are subject to the deposition of dust on the optical element.

### Explanation of the invention

All the aforesaid objects are achieved by the invention according to one or more of the attached claims.

In particular, it is a safety device for multiple lighting, equipped with an optical element embedded in the luminaire, characterised by the fact that the front surface of the luminaire has no irregularities, where said optical element has a thickness S approximately the same as the lateral thickness of the luminaire, which can connect with one or more light sources at its rear surface, where the rear part of said optical element has at least two surfaces and is able to collect the frontal, inclined and lateral flux emitted by the light source, and to guide, due to the difference of the refractive index, the luminous flux towards its front outer part in the frontal direction, and by means of a recess, with at least one of its flat reflection surfaces, or rotational surfaces, reflecting in the direction through the front lateral, diagonal and lower surfaces. The invention is further defined by the fact that said light source is composed of a pair of LEDs, the first of which makes most of the luminous flux available for frontal emission, and the second of which makes most of the luminous flux available for inclined and side emission. Advantageously, said LEDs are installed at the front of the luminaire, simplifying assembly and facilitating maintenance.

Advantageously, the lateral thickness of the optical element, corresponding to the lateral thickness of the luminaire, produces an emission surface for the side and slanted lighting, in order to correctly illuminate the right and left wall of the cuboidal room in which the luminaire has been placed.

Advantageously, the optical element, in one or more parts, has been machined to configure the surfaces as reflective surfaces or as transmission surfaces in order to reflect part of the light emitted by the light source in the following directions: side, diagonal and downwards.

Advantageously, the optical element lens has an internal structure that guides, using the difference of the refractive index, the reflected light to the external surface (right or left). The invention is further defined by any of the following, or any combination thereof:
- the non-protruding shaping of the front surface of the optical element has a recess with an inclined flat reflecting surface to reflect the beams of the light source directed by the surfaces on the inside of the optical element towards the lower outlet surface.
- the non-protruding shaping of the front surface of the optical element has a recess with an inclined rotational reflecting surface to reflect the light source beams directed by the surfaces on the inside of the optical element towards the corner outlet surface.
- the non-protruding shaping of the front surface of the optical elements has a recess with a flat reflecting surface and/or an inclined rotational reflection surface to reflect the light source beams directed by the surfaces on the inside of the optical element towards the surface of side outlet.

Advantageously at least two of the aforesaid recesses are contiguous and continuous, facilitating the machining and construction, and rendering the device compact.

Advantageously, if two or more light sources are used close together, the receiving and reflecting surfaces, either flat or rotational, are replicated taking into account the shape of the light source.

Advantageously, the shape of the outer surface makes it possible to direct the light in the preferential directions in order to comply with regulatory standards.

These advantages and other objects are all achieved by the multiple illumination safety device according to the appended claims.

### Brief description of the drawings

The technical characteristics of the invention, according to the aforesaid objects, can clearly be seen in the content of the claims below, and its advantages will become more readily apparent in the detailed description that follows, made with reference to the accompanying drawings, which illustrate a preferred embodiment, which is purely exemplary and not limiting, in which:

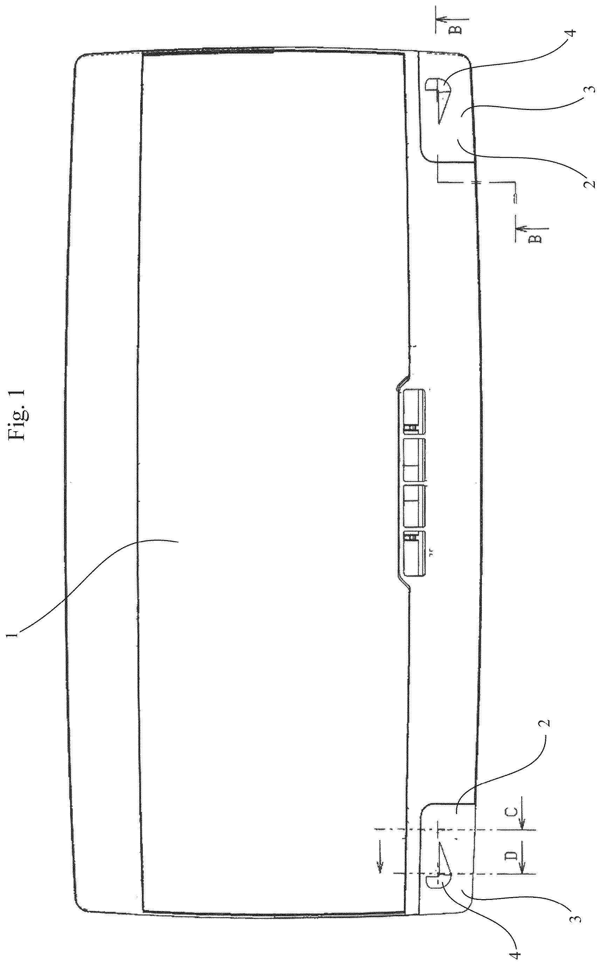

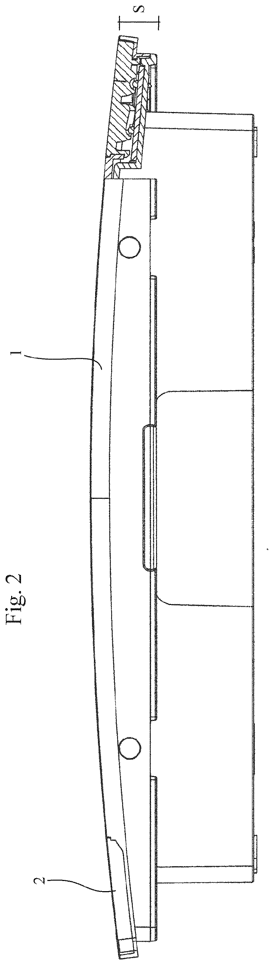

Figures 1 and 2 show a front and side view of a luminaire, partially in section (the section plane B-B of figure 1), accessorised laterally by a pair of optical elements, the object of the invention.

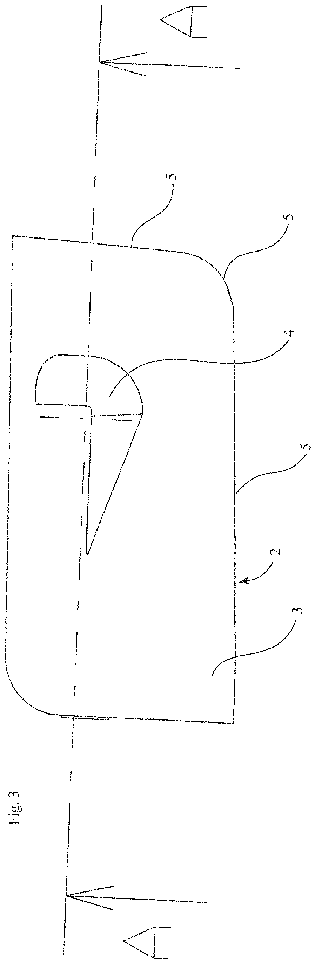

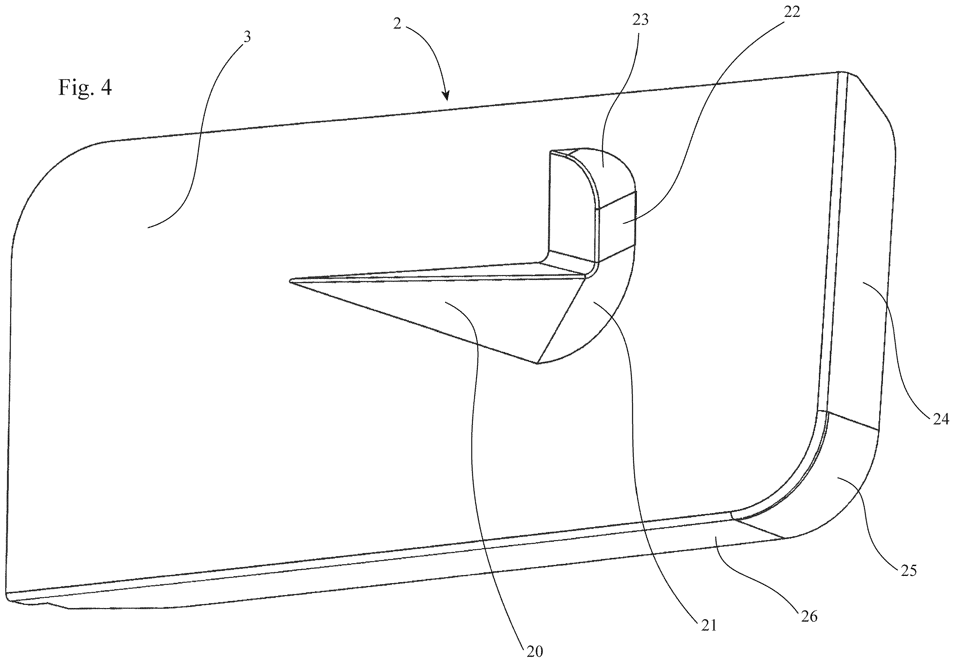

Figures 3 and 4 show the object of the invention from a flat front view and a front perspective view, so as to highlight the machining on the outer front surface.

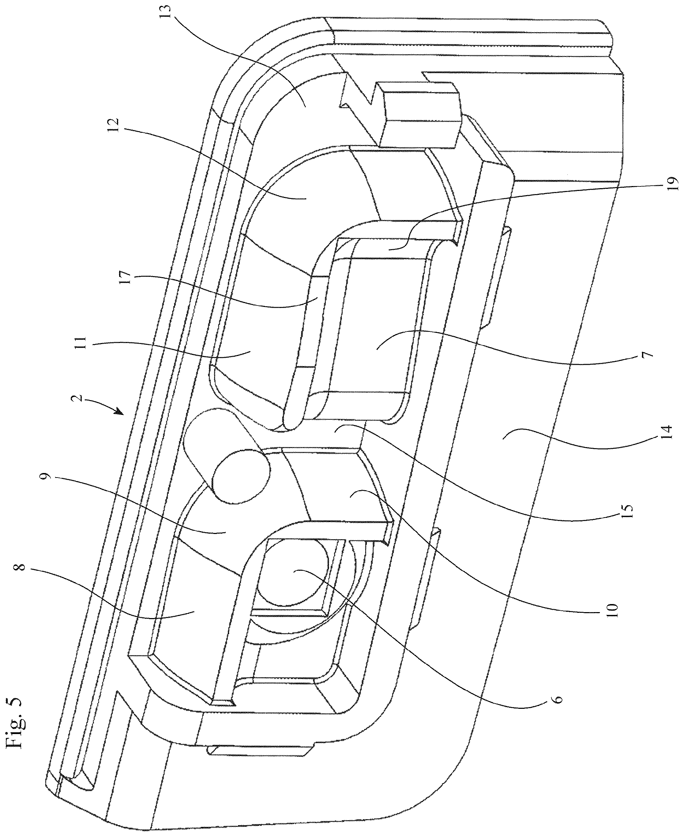

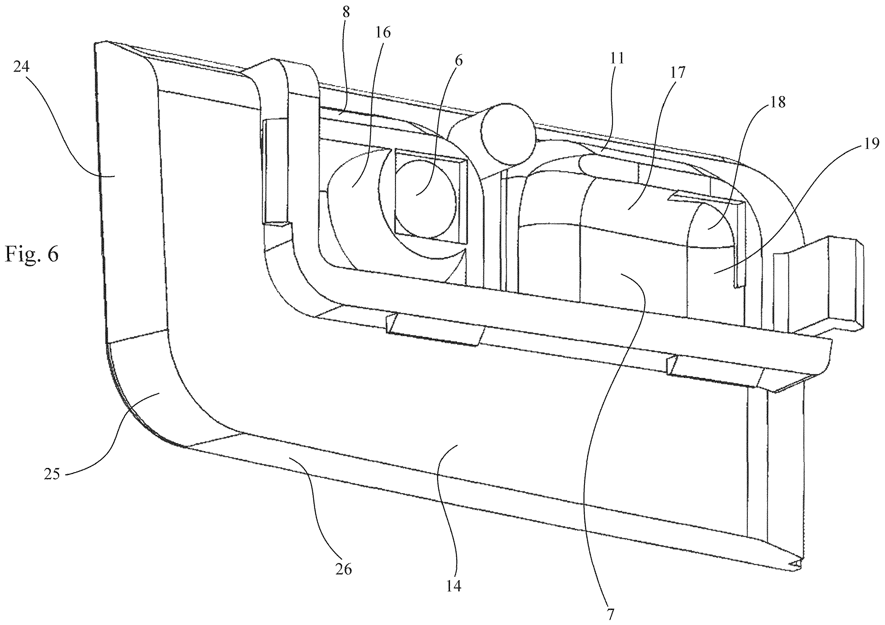

Figures 5 and 6 show the object of the invention from two different perspective views of the rear part, which show the processing and configurations of the surfaces and the planes for collecting practically all the luminous flux emitted by one or more light sources.

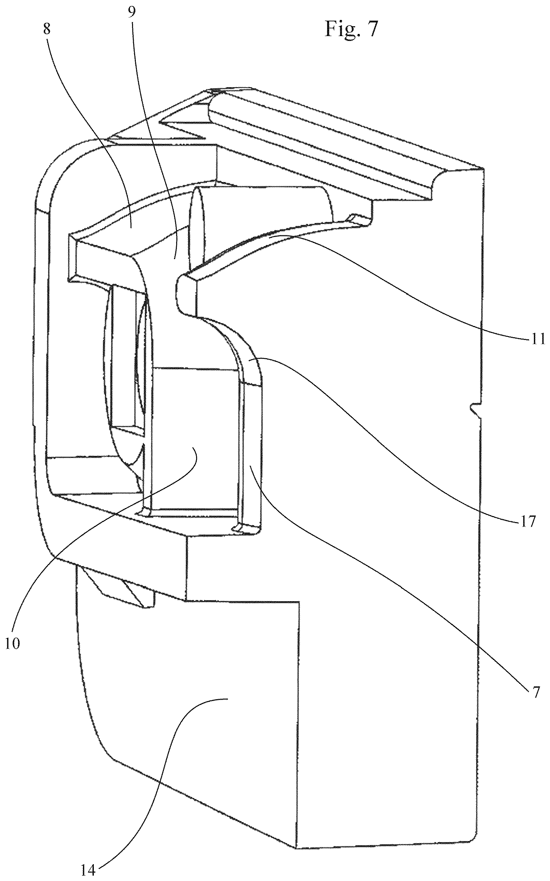

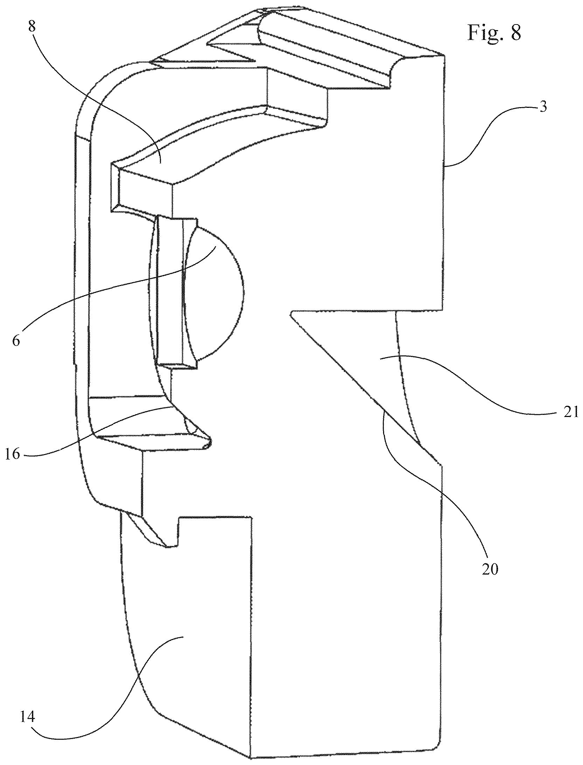

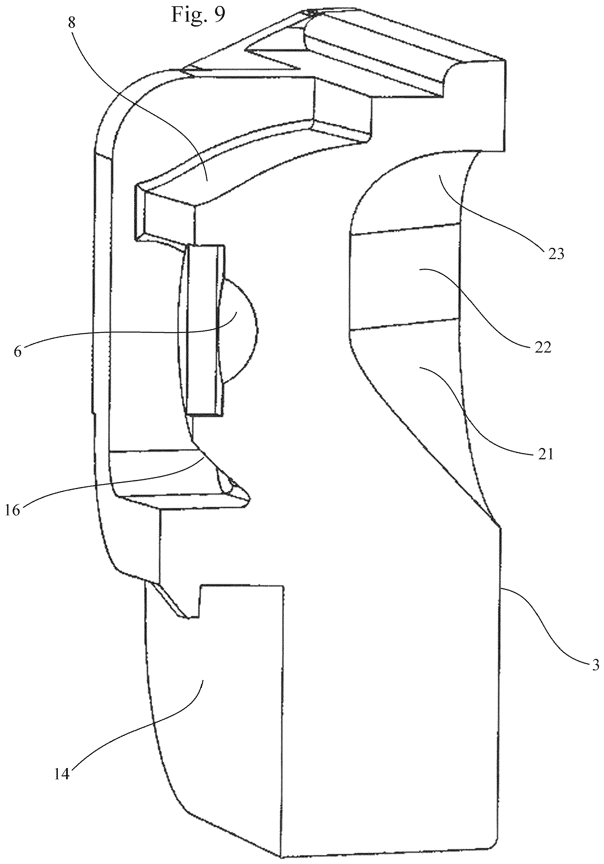

Figures 7, 8 and 9 show the optical elements of figures 5 and 6 with respect to various sections according to a vertical plane (indicatively shown for figure 7 in plane C and for figure 8 in plane D of figure 1).

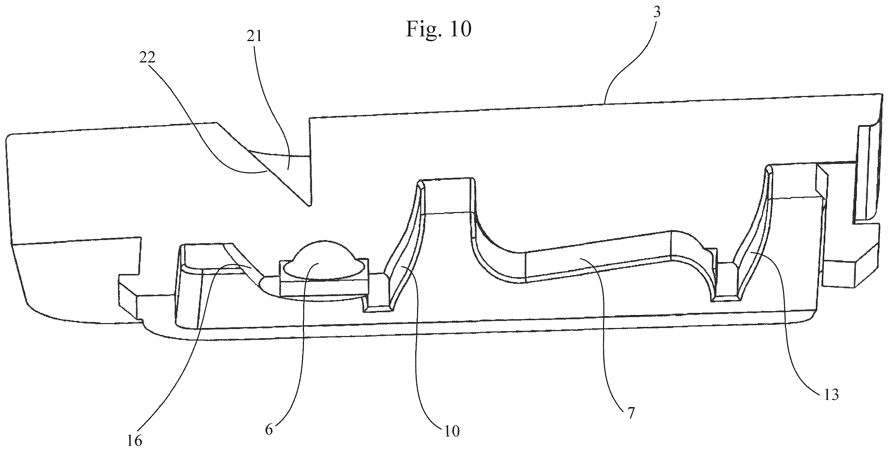

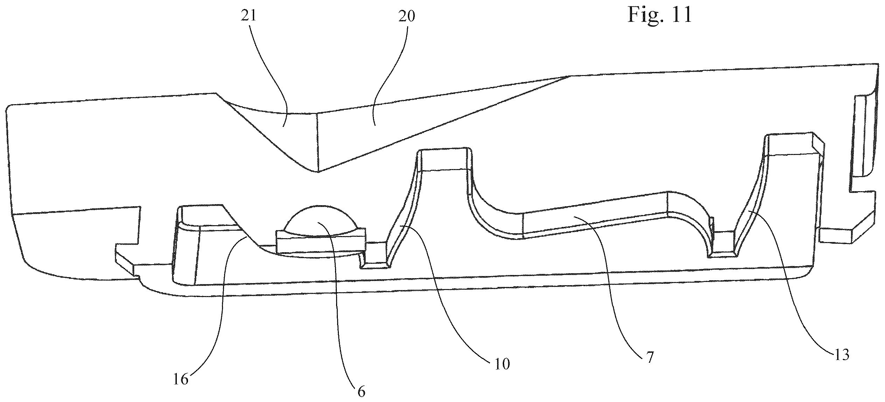

Figures 10 and 11 show the optical elements of figures 5 and 6 with respect to various sections according to a horizontal plane (for fig. 10 indicatively in the section A-A of fig. 3).

Detailed description of an example of a preferred embodiment The safety device for multiple lighting, which is the object of the invention, shows a luminaire 1 accompanied laterally by a pair of optical elements 2.

The above-mentioned optical element elements 2 due to their machining, configurations and contours of the surfaces, facing inwards and outwards, can provide adequate illumination of the surfaces of a cuboid in which the luminaire has been placed with a minimum illumination value (lux) dependent on the time of the emitted light pulse.

This lighting, in accordance with regulatory requirements, is particularly difficult to satisfy for lighting an angle of 90° sideways to the lighting fixture (+ 90° to the right and -90° to the left), without refractive diffusing optical systems that protrude from the luminaire at the front.

In fact, with traditional diffusing or refractive optical systems, the side walls of the optical system are protruding and therefore able to emit light sideways and satisfy legal lighting requirements.

In the device of the invention, on the other hand, it is possible to satisfy the regulatory standards by emitting light laterally to the luminaire 1 without using protruding optical elements 2, thereby improving the aesthetic appearance, the mechanical strength and at the same time reducing the effect of dust deposition on the optical element.

The optical element 2 that has been developed, in fact, is integrated into the casing of the luminaire 1.

The optical element 2 is connected to LED diodes that emit frontally with respect to the luminaire 1, simplifying assembly and reducing costs compared to emission systems with angled boards. The operating principle of the optical element 2, corresponding to a lens, is based on the total internal reflection and the waveguide. The optical element 2 that has been developed is embedded in the luminaire 1, the front surface of the lighting fixture 1 has no unevenness.

The optical element 2 uses one or more LED diodes that emit frontally with respect to the luminaire 1.

In the example shown in the drawings there is a pair of optical elements 2 which are positioned in the two bottom corners (right and left) of the luminaire 1.

The optical element 2 uses the lateral thickness S of the luminaire 1 to obtain an emission surface that provides the correct illumination of the right and left wall of the cuboidal room in which the lighting fixture 1 has been placed.

The optical element 2 has particular machining on the surface, designed to reflect part of the light emitted frontally of the LEDs in the following directions: side, diagonal and downwards.

In particular:
- on the external front surface 3 of the optical element 2 there is a recess 4, as non-protruding shaping;
- the side surface 5 of the optical element 2 has been specially configured for side, slanted and downward illumination;
- the rear surface has been specially machined to collect, connect and distribute the luminous flux coming from the light sources. The optical element 2, then, has an internal structure that guides, due to the difference of the refractive index, the reflected light to the external surface (right or left).

The shape of the outer surface of the optical element makes it possible to direct the light in the preferred directions in order to comply with regulatory standards.

All the various surfaces are listed below and the related configuration and function are set out in detail.

Surface 6: input surface of LED1, the surface is concave with a hemispherical shape, does not change the direction of the incident rays.

Surface 7: input surface of LED 2, the surface is flat but slanted with respect to the optical output plane to direct the incoming beams in the opposite direction to the lateral exit direction of the lens.

Surfaces 8 and 11: internal reflection surfaces "extruded" with respect to the horizontal plane, direct the light emitted towards the positive vertical axis (upwards) of LED 1 and LED 2 towards the front surface of the lens.

Surfaces 9 and 12: internal "rotation" reflection surfaces, direct the light emitted towards the diagonal (positive vertical and positive horizontal towards the upper right) of LED 1 and LED 2 towards the front surface of the lens.

Surfaces 10 and 13: internal reflection surfaces "extruded" with respect to the vertical plane, directing the light emitted towards the positive horizontal axis (towards the right) of LED 1 and LED 2 towards the front surface of the lens
Surfaces 14 and 15: flat surfaces parallel to the outlet surface with light guide effect, they have the function of confining the light emitted laterally towards the side emission surface.

Surface 16: internal "rotational" reflection surface, directs the light emitted towards the diagonal (negative vertical and negative horizontal towards the bottom left) of LED 1 towards the front surface of the lens.

Surface 17: input surface of LED 2, the surface is a curve extruded with respect to the horizontal axis, together with surface 11 it allows the beams to be directed towards the front surface of the lens.

Surface 18: input surface of LED 2, the "rotational" surface, together with the surface 12 allows the beams to be directed towards the front surface of the lens.

Surface 19: input surface of the LED 2, the surface is a curve extruded with respect to the vertical axis, and together with surface 13 allows the beams to be directed towards the front surface of the lens.

Surface 24: side outlet flat surface.

Surface 25: corner outlet surface, angle downwards, right.

Surface 26: lower outlet flat surface.

Surface 27: front outlet flat surface.

Surface 20: flat reflection surface, reflects the beams of the LED 1 directed towards the front from the surfaces 8, 9, 10 and 16 towards the lower outlet surface 26.

Surface 21: rotational reflection surface, reflects the beams of the LED 1 directed towards the front from the surfaces 8, 9, 10 and 16 towards the corner outlet surface 25.

Surface 22: flat reflection surface, reflects the beams of the LED 1 directed towards the front from the surfaces 8, 9, 10 and 16 towards the side outlet surface 24.

Surface 23: rotational reflection surface, reflects the beams of the LED 1 directed towards the front from the surfaces 8, 9, 10 and 16 towards the side outlet surface 24.

In the event two or more light sources are used connected to the same optical element, the shape and the functionality of the various flat or rotational reflection surfaces for collecting and directing all the flux take into account the shape of the light source.

In the event of the aforesaid, there is therefore a correspondence of function for the various forms of surfaces 6 = 7 (and possibly 17, 18, 19); 8=11; 9=12; 10=13.

The inclination of surface 7 makes it possible to fraction the incident flux of the respective light source between frontal emission and side emission; in particular for the side emission by using the same machining 4, like non-protruding shaping, of the recess on the external front surface of the optical element 2.

## Claims

1. Multiple lighting safety device with an optical element (2) embedded into lighting fixture (1) wherein the front surface of the lighting fixture (1) does not have any irregularities, where said optical element (2) has a thickness S approximately equal to the thickness of the lighting fixture side, is adapted to be connected to one or more light sources at its rear, including the back of said optical element (2) at least two surfaces (6, 8, 9, 10, 11) and capable of collecting the flux, front, inclined and side, emitted by the light source, and to guide, due to the difference of the refractive index, the luminous flux towards its front outside part in the frontal direction, wherein said optical element further comprises a recess (4), with at least one flat reflection surface (20, 22), or one rotational reflection surface (21, 23), wherein said reflection surface is capable of guiding the luminous flux of the light source through the side (24), diagonal (25) and lower surfaces (26) of the optical element; **characterized in that** said light source is composed of a pair of LEDs, the first of which makes most of the light flux for the frontal emission, and the second of which makes most of the light fluxes for inclined and side emission;
whereinthe optical element has a front surface with a non protruding shape and the recess is located in said front surface, the recess having :
- a flat reflection surface (20) that is slanted to reflect the light source beams directed by the surfaces onto the inner side (8, 9, 10, 11) of the optical element (2) towards the lower output surface (26);
- and/or a slanted reflection surface (21) to reflect the beams of the directed light source from the surfaces on the inside (8, 9, 10, 11) of the optical element (2) towards the corner output surface (25);
- and/or a flat reflection surface (22) and/or a rotational reflection surface (23) slanted to reflect the light source beams directed by the surfaces onto the inner side (8, 9, 10, 11) of the optical element (2) towards the side output surface (24).

2. Multiple lighting safety device according to claim 1,
**characterised by** the fact that said LEDs are mounted frontally with respect to the lighting fixture (1).

3. Multiple lighting safety device according to claim 1, **characterised by** the fact that the lateral thickness S of the optical element (2), corresponding to the lateral thickness of
the lighting fixture, creates an emission surface for side and inclined lighting.

4. Multiple lighting safety device according to claim 1, **characterised by** the fact that the optical element (2) in one or more parts has been machined to configure the surfaces as reflection planes or transmission planes in order to reflect part of the light emitted from the light source in the following directions: the side, the diagonal and the down.

5. Multiple lighting safety device according to claim 1, **characterised by** the fact that the optical element (2) has an internal structure for guiding, due to the difference of the refractive index, the reflected light to the outer surface (right or left).

6. Multiple lighting safety device according to claim 1 **characterised by** the fact that at least two of said recesses are contiguous and continuous.

## Patentansprüche

1. Sicherheitsvorrichtung mit Mehrfachbeleuchtung und einem optischen Element (2), das in einer Leuchte (1) eingebettet ist, wobei die Vorderseite der Leuchte (1) keine Unregelmäßigkeiten aufweist, wobei das optische Element (2) eine Dicke S aufweist, die ungefähr gleich der Dicke der Seite der Leuchte ist, und so ausgebildet ist, dass es an seiner Rückseite mit einer oder mehreren Lichtquellen verbunden werden kann, wobei die Rückseite des optischen Elements (2) mindestens zwei Flächen (6, 8, 9, 10, 11) einschließt, die in der Lage sind, den von der Lichtquelle abgegebenen Lichtstrom, vorne, schräg und seitlich, zu sammeln und aufgrund des Brechungsindexunterschieds den Lichtstrom zu ihrem vorderen äußeren Teil in die frontale Richtung zu leiten, wobei das optische Element ferner eine Aussparung (4) mit mindestens einer flachen Reflexionsoberfläche (20, 22) oder einer Rotationsreflexionsoberfläche (21, 23) umfasst, wobei die Reflexionsoberfläche in der Lage ist, den Lichtstrom der Lichtquelle durch die Seitenfläche (24), Schrägfläche (25) und Unterseite (26) des optischen Elements zu leiten; **dadurch gekennzeichnet, dass** die Lichtquelle aus einem Paar LEDs besteht, von denen die erste den größten Teil des Lichtflusses für die frontale Abstrahlung und die zweite den größten Teil des Lichtflusses für die schräge und seitliche Abstrahlung erzeugt, wobei das optische Element eine Vorderseite mit einer nicht hervorstehenden Form aufweist und sich die Aussparung in der Vorderseite befindet, wobei die Aussparung Folgendes aufweist:
- eine flache Reflexionsfläche (20), die schräg verläuft, um die von den Flächen auf die Innenseite (8, 9, 10, 11) des optischen Elements (2) gerichteten Lichtquellenstrahlen zur unteren Ausgangsfläche (26) zu reflektieren;
- und/oder eine schräge Reflexionsoberfläche (21), um die Strahlen der gerichteten Lichtquelle von den Oberflächen an der Innenseite (8, 9, 10, 11) des optischen Elements (2) in Richtung der Eckausgangsfläche (25) zu reflektieren;
- und/oder eine flache Reflexionsoberfläche (22) und/oder eine Rotationsreflexionsoberfläche (23), die schräg verläuft, um die von den Oberflächen auf die Innenseite (8, 9, 10, 11) des optischen Elements (2) gerichteten Lichtquellenstrahlen zur seitlichen Ausgangsfläche (24) zu reflektieren.

2. Sicherheitsvorrichtung mit Mehrfachbeleuchtung nach Anspruch 1, **dadurch gekennzeichnet, dass** die genannten LEDs in Bezug auf die Leuchte (1) frontal montiert sind.

3. Sicherheitsvorrichtung mit Mehrfachbeleuchtung nach Anspruch 1, **dadurch gekennzeichnet, dass** die seitliche Dicke S des optischen Elements (2), die der seitlichen Dicke der Leuchte entspricht, eine Abstrahlfläche für seitliche und schräge Beleuchtung schafft.

4. Sicherheitsvorrichtung mit Mehrfachbeleuchtung nach Anspruch 1, **dadurch gekennzeichnet, dass** das optische Element (2) in einem oder mehreren Teilen so bearbeitet wurde, dass die Oberflächen als Reflexionsebenen oder Transmissionsebenen konfiguriert sind, um einen Teil des von der Lichtquelle emittierten Lichts in die folgenden Richtungen zu reflektieren: seitlich, diagonal und nach unten.

5. Sicherheitsvorrichtung mit Mehrfachbeleuchtung nach Anspruch 1, **dadurch gekennzeichnet, dass** das optische Element (2) eine interne Struktur aufweist, um aufgrund des Unterschieds des Brechungsindexes das reflektierte Licht zur äußeren Oberfläche (rechts oder links) zu leiten.

6. Sicherheitsvorrichtung mit Mehrfachbeleuchtung nach Anspruch 1, **dadurch gekennzeichnet, dass** mindestens zwei der genannten Aussparungen aneinander angrenzen und durchgehend sind.

## Revendications

1. Dispositif de sécurité pour éclairage multiple équipé d'une optique (2) encastrée dans un corps éclairant (1) où la surface frontale du corps éclairant (1) ne présente aucune irrégularité, présentant ladite optique (2) une épaisseur S à peu près égale à l'épaisseur latérale du corps d'éclairage, apte à s'associer à une ou plusieurs sources lumineuses sur la surface arrière, la partie arrière de ladite optique (2) comprenant au moins deux surfaces (6, 8, 9, 10, 11) et apte à capter le flux frontal, incliné et latéral, émis par la source lumineuse, et à guider, par différence d'indice de réfraction, le flux lumineux vers sa partie externe avant, en direction frontale, et au moyen d'une entaille (4), avec au moins une des surfaces planes (20, 22), ou à rotation (21, 23) de réflexion dans laquelle ladite surface de réflexion est capable de guider le flux lumineux de la source lumineuse à travers les surfaces latérales (24), diagonales (25) et vers le bas (26) de l'élément optique; **caractérisé par le fait que** ladite source lumineuse est constituée d'une paire de leds, dont le premier rend la plus grande partie du flux lumineux disponible pour l'émission frontale, et le second rend la plus grande partie du flux lumineux disponible pour l'émission inclinée; dans lequel l'élément optique a une surface frontale à la forme non saillante et l'entaille est positionnée dans ladite surface frontale, l'entaille ayant:
- une surface de réflexion plate (20) inclinée pour refléter les faisceaux de la source lumineuse dirigés par les surfaces sur le côté interne (8, 9, 10, 11) de l'optique (2) vers la surface de sortie inférieure (26);
- une surface de réflexion (21) à rotation inclinée pour refléter les faisceaux de la source lumineuse dirigés par les surfaces du côté interne (8, 9, 10, 11) de l'optique (2) vers la surface de sortie angulaire (25);
- une surface de réflexion plate (22) et / ou une surface de réflexion à rotation (23) inclinée pour refléter les faisceaux de la source lumineuse dirigés par les surfaces du côté interne (8, 9, 10, 11) de l'optique (2) vers la surface de sortie latérale (24).

2. Dispositif de sécurité pour éclairage multiple selon la revendication 1 **caractérisé par le fait que** lesdits leds sont installés frontalement par rapport au corps d'éclairage (1).

3. Dispositif de sécurité pour éclairage multiple selon la revendication 1 **caractérisé par le fait que** l'épaisseur latérale S de l'optique (2), correspondant à l'épaisseur latérale du corps d'éclairage, réalise une surface d'émission pour un éclairage latéral et incliné.

4. Dispositif de sécurité pour éclairage multiple selon la revendication 1 **caractérisé par le fait que** l'optique (2), en une ou plusieurs parties, présente des dispositions pour configurer les surfaces comme plans de réflexion ou comme plans de transmission afin de pouvoir refléter une partie de la lumière émise par la source lumineuse vers les directions suivantes : latérale, diagonale et bas.

5. Dispositif de sécurité pour éclairage multiple selon la revendication 1 **caractérisé par le fait que** l'optique (2) présente une structure interne telle à guider la lumière reflétée jusqu'à la surface externe (droite ou gauche), par différence d'indice de réfraction.

6. Dispositif de sécurité pour éclairage multiple selon la revendication 1 **caractérisé par le fait qu'**au moins deux des entailles précitées sont contiguës et continues.
